# EUROPEAN PATENT APPLICATION

(11) **EP 4 521 307 A1**
(43) Date of publication of application: **12.03.2025**
(21) Application number: 24193271.4
(22) Date of filing: 07.08.2024
(51) Int. Cl.: G06N 5/045, G06N 20/00

(54) **INFORMATION PROCESSING PROGRAM, INFORMATION PROCESSING METHOD, AND INFORMATION PROCESSING DEVICE**

(30) Priority: 08.09.2023 JP 2023146516
(71) Applicant: FUJITSU LIMITED, Kawasaki-shi, Kanagawa 211-8588 (JP)
(72) Inventor: Tago, Shinichiro, Kawasaki-shi, Kanagawa, 211-8588 (JP); Fuji, Masaru, Kawasaki-shi, Kanagawa, 211-8588 (JP)
(74) Representative: Hoffmann Eitle

(57) **Abstract**

An information processing program for causing a computer to execute processing includes: extracting partial data that corresponds to each of a plurality of patterns of which an index according to an appearance frequency in a plurality of training samples is equal to or more than a second threshold, that is a pattern of a combination of one or more feature amounts of which a contribution degree to estimation of a machine learning model is equal to or more than a first threshold, from among the plurality of training samples that includes the plurality of feature amounts, from estimation target data that includes a plurality of feature amounts, to be a target of estimation processing by using the machine learning model; calculating a likelihood of an estimation result of a partial model for each pattern, in a case where the partial data extracted from the estimation target data is input to a corresponding partial model among the partial models trained for the respective patterns; and outputting the partial data selected based on the likelihood calculated for each partial model for each pattern, as an estimation basis of the machine learning model for the estimation target data.

## Description

### FIELD

The disclosed technology is related to an information processing program, an information processing method, and an information processing device.

### BACKGROUND

In recent years, in various fields such as medical or financial fields, various systems using estimation by Artificial Intelligence (AI) have been actively introduced. The estimation by the AI may be referred to as classification. As described above, with spread of the technology using the estimation by the AI, a black-box AI such as deep learning has an aspect that it is difficult to understand an estimation basis how estimation is performed.

In a specific region, not only an estimation result but also how the estimation is performed may be important. For example, in the medical field, it is important not to estimate a diseased disease and present only the name of the disease but also to present a basis of determination regarding the disease. As a more specific example, by clarifying which part of an X-ray photograph is focused and how the estimation is performed, it is possible to satisfy doctors and patients. As described above, in order to satisfy the made estimation, it is important to share the estimation basis including its process.

Typically, various methods for clarifying the estimation basis for such estimation performed by the AI have been studied. For example, an information processing device has been proposed that outputs information that facilitates understanding of a basis of estimation by a machine learning model. The information processing device acquires a contribution degree regarding each relationship between a plurality of nodes included in a graph structure indicating a relationship between the nodes, for an estimation result of the machine learning model. Furthermore, the information processing device displays a graph in which a first structure indicating a first class to which one or the plurality of nodes in the graph structure belongs and a second structure indicating a first node, belonging to the first class, of which a related contribution degree is equal to or more than a threshold are coupled.

Furthermore, for example, as potential explanation of a labeled edge type class, a system that ranks subgraphs is proposed. The system acquires a first graph each representing a labeled digital item represented as an entity node coupled to a property value node via the labeled edge type. The first graph is combined with a second graph representing a structured relationship in the labeled digital item, and a combined graph is obtained. Furthermore, this system receives a digital item with no label and collates the received digital item with each subgraph in the combined graph. Furthermore, this system embeds the combined graph and generates a graph vector, using the machine learning model and generates an expressive score between the matched subgraph and each labeled edge type, based on the generated graph vector. Then, this system ranks the matched subgraphs based on the expressive score and acquires a set of the subgraphs ranked as the potential explanation of each labeled edge type classes.

### [Citation List]

### [Patent Literature]

[PTL 1] Japanese Laid-open Patent Publication No. 2022-111841.
[PTL 2] U.S. Patent No. 11442963.

### SUMMARY OF INVENTION

### PROBLEMS

However, the technology that presents the feature of which the contribution degree is equal to or more than the threshold as the estimation basis only grasps and describes a part that can be estimated, and there is a case the technology is less persuasive. For example, with this technology, as explanation of a basis of estimating that a cat picture is a cat, there is a case where only eyes and ears are presented from features in the picture. Furthermore, in this technology, in estimation of a number from an image of a handwritten character, as explanation of a basis of estimating the number five, there is a case where only a characteristic part of the number five is presented. That is, with this technology, in a case where estimation can be performed based on a specific feature, even in a case where other features may supplement the explanation, the other features are not presented as the explanation of the estimation basis.

Furthermore, the technology of acquiring the set of the ranked subgraphs as the potential explanation of the labeled edge type class gives supplementary information to graph information and enhance the explanation, and performs ranking. That is, this technology combines the graphs in order to supplement original information described from one viewpoint and does not add a new parallel estimation basis.

As one aspect, an object of the disclosed technology is to explain a highly persuasive and reliable estimation basis from multiple viewpoints, for estimation of a machine learning model.

### Solution to Problem

According to an aspect of the embodiments, an information processing program for causing a computer to execute processing includes: extracting partial data that corresponds to each of a plurality of patterns of which an index according to an appearance frequency in a plurality of training samples is equal to or more than a second threshold, that is a pattern of a combination of one or more feature amounts of which a contribution degree to estimation of a machine learning model is equal to or more than a first threshold, from among the plurality of training samples that includes the plurality of feature amounts, from estimation target data that includes a plurality of feature amounts, to be a target of estimation processing by using the machine learning model; calculating a likelihood of an estimation result of a partial model for each pattern, in a case where the partial data extracted from the estimation target data is input to a corresponding partial model among the partial models trained for the respective patterns; and outputting the partial data selected based on the likelihood calculated for each partial model for each pattern, as an estimation basis of the machine learning model for the estimation target data.

### EFFECTS OF INVENTION

As one aspect, an effect is achieved that it is possible to describe a highly persuasive and reliable estimation basis from multiple viewpoints, with respect to estimation of a machine learning model.

### BRIEF DESCRIPTION OF DRAWINGS

FIG. 1 is a functional block diagram of an information processing device according to the present embodiment;
FIG. 2 is a diagram illustrating an example of a training sample;
FIG. 3 is a diagram for explaining processing of a specifying unit;
FIG. 4 is a diagram for explaining processing of a second training unit;
FIG. 5 is a diagram for explaining processing of a determination unit;
FIG. 6 is a diagram for explaining processing of an extraction unit;
FIG. 7 is a diagram for explaining processing of an estimation unit and an explanation unit;
FIG. 8 is a block diagram illustrating an example of a schematic configuration of a computer that functions as the information processing device;
FIG. 9 is a flowchart illustrating an example of machine learning processing;
FIG. 10 is a diagram for explaining processing of the specifying unit;
FIG. 11 is a diagram for explaining processing of the second training unit;
FIG. 12 is a diagram for explaining processing of the determination unit;
FIG. 13 is a flowchart illustrating an example of estimation explanation processing; and
FIG. 14 is a diagram for explaining effects of the present embodiment.

### DESCRIPTION OF EMBODIMENTS

Hereinafter, an example of an embodiment according to the disclosed technology will be described with reference to the drawings.

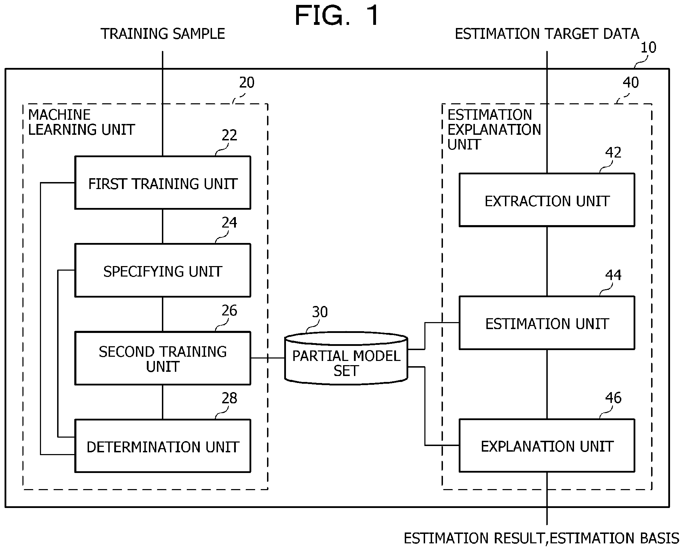

As illustrated in FIG. 1, an information processing device 10 functionally includes a machine learning unit 20 and an estimation explanation unit 40. Furthermore, a partial model set 30 is stored in a predetermined storage region of the information processing device 10. Hereinafter, each of the machine learning unit 20 and the estimation explanation unit 40 will be described in detail.

First, the machine learning unit 20 will be described. The machine learning unit 20 is a functional unit that functions at the time of machine learning. At the time of machine learning, a plurality of training samples is input to the information processing device 10.

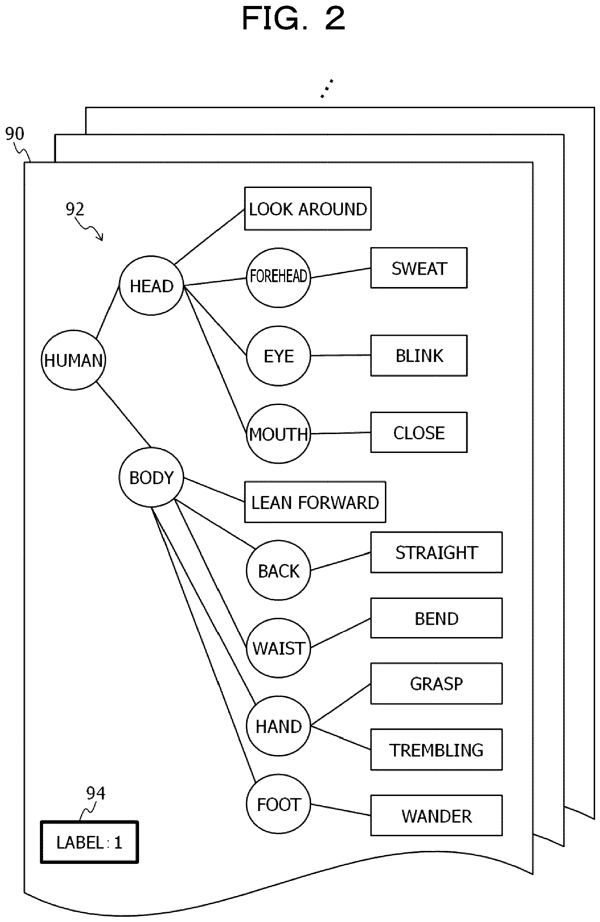

As illustrated in FIG. 2, a training sample 90 includes data 92 including a feature amount of each of a plurality of items and a label 94 indicating a correct answer for the data. In the example in FIG. 2, the data 92 is graph data that indicates the plurality of items as nodes in a hierarchical structure (node represented by circle in FIG. 2) and indicates the feature amount of each item as a node coupled to the node indicating the item (node represented by square in FIG. 2). In the graph data, the nodes corresponding to the items having a hierarchical relationship and the nodes corresponding to the item and the feature amount are coupled to each other with edges.

The example in FIG. 2 is an example of the training sample 90 assuming that a task such as behavior confirmation of a person is executed by a machine learning model. In this case, the data 92 is configured with a portion of a human body as an item and information indicating a feature of an operation of the portion as a feature amount. In the graph data in FIG. 2, "person" is set as a root node, and nodes indicating "head" and "body" that are portions of large classification of the human body are coupled to the root node. Furthermore, to the node indicating "head", nodes indicating "forehead", "eye", and "mouth" that are portions of small classification of the head are coupled. Furthermore, to the node indicating "body", nodes indicating "back", "waist", "hand", and "foot" that are portions of small classification of the body are coupled.

To the node of each item, the node of the feature amount for the item is coupled. Th feature amount is, for example, information acquired by analyzing a moving image in which a person is imaged, or the like. However, in the present embodiment, it is assumed that the training sample 90 in a graph data form as illustrated in FIG. 2 can be acquired, and a method for acquiring the feature amount is not limited. Furthermore, in the graph data, the plurality of nodes of the feature amounts may be coupled to the node indicating the single item. Furthermore, to the node ("head" and "body" in example in FIG. 2) coupled to a node indicating an item, at a lower level, the node of the feature amount does not necessarily need to be coupled.

In the example in FIG. 2, the label 94 is information indicating whether or not a behavior of the person indicated by the data 92 is a behavior to be estimated by the machine learning model (for example, shoplifting behavior or the like). For example, in a case where the behavior of the person indicated by the data 92 is the behavior to be estimated, "1" may be set, and in a case where the behavior is not the behavior to be estimated, "0" may be set. Furthermore, in a case where the task by the machine learning model is to classify the behavior of the person into any one of a plurality of behaviors, an identifier of each behavior may be the label 94.

As illustrated in FIG. 1, the machine learning unit 20 includes a first training unit 22, a specifying unit 24, a second training unit 26, and a determination unit 28.

The first training unit 22 trains the machine learning model, using the plurality of training samples 90. In order to distinguish the machine learning model trained by the first training unit 22 from a partial model trained by the second training unit 26 to be described later, the machine learning model trained by the first training unit 22 is referred to as an "overall model" below. The overall model may include a deep neural network that can handle graph data or the like. Specifically, the first training unit 22 optimizes a parameter of the overall model so that an estimation result estimated by inputting each piece of the data 92 of the training sample 90 into the overall model matches the label 94 of the training sample 90.

Furthermore, in a case where a new training sample (details will be described later) is transferred from the determination unit 28 to be described later, the first training unit 22 trains a new overall model, using the new training sample. Hereinafter, an overall model trained in i-th processing in repetition is referred to as an "overall model_i". That is, the overall model trained by the training sample 90 input to the information processing device 10 is an overall model_1.

The specifying unit 24 specifies a pattern candidate indicating a combination of one or more feature amounts of which a contribution degree to estimation of the overall model is equal to or more than a threshold TH1, from each of the plurality of training samples 90. Furthermore, the specifying unit 24 specifies a pattern candidate of which an index according to an appearance frequency in the plurality of training samples 90 is equal to or more than a threshold TH2, as a high frequency pattern, from among the specified pattern candidates. The threshold TH1 is an example of a "first threshold" of the disclosed technology, and the threshold TH2 is an example of a "second threshold" of the disclosed technology.

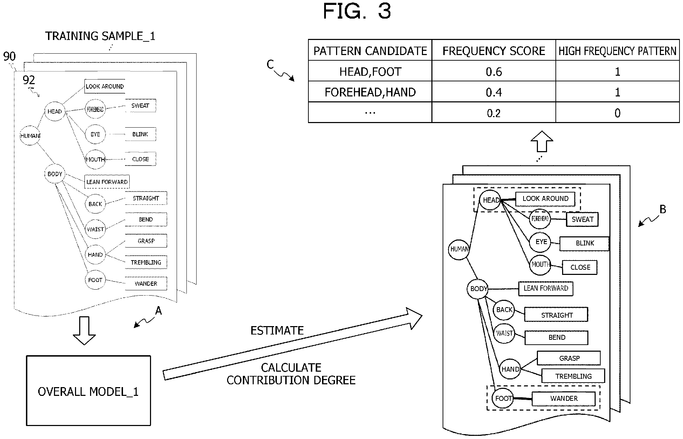

More specifically, as illustrated in A of FIG. 3, the specifying unit 24 inputs the data 92 for each of some or all of the plurality of training samples 90 to the overall model_1, and acquires an estimation result, an estimation score, and a contribution degree of each feature amount to the estimation result. The estimation score is a value (likelihood) indicating a likelihood that the estimation result is a correct answer. For example, in a case where the estimation result of the overall model is output as a probability value, the probability value may be used as the estimation score. For example, SHapley Additive exPlanations (SHAP) or the like may be applied to the contribution degree. Note that, although not illustrated, it is assumed that the contribution degree of the feature amount be given to the edge that couples the node indicating the item and the node indicating the feature amount of the item.

As indicated by a broken line portion in B of FIG. 3, the specifying unit 24 specifies a feature amount of which a contribution degree is equal to or more than the threshold TH1, from the data 92 of each training sample 90. In FIG. 3, the edge to which the contribution degree equal to or more than the threshold TH1 is given is represented by a thicker line than other edges. The specifying unit 24 specifies a combination of the items corresponding to the feature amounts specified from each training sample 90 as the pattern candidate. For each pattern candidate, the specifying unit 24 calculates a frequency score that increases as the pattern candidate is specified from more training samples 90. The frequency score is an example of the index according to the appearance frequency in the plurality of training samples 90.

For example, the specifying unit 24 calculates a value obtained by multiplying the estimation score of the training sample 90 by a sum of the contribution degrees of the feature amounts for the items included in the pattern candidate, for the pattern candidate specified for each training sample 90. The specifying unit 24 calculates a value obtained by dividing a total of values similarly calculated for the training sample 90 for which the same pattern candidate is specified by the number of training samples as a frequency score of the candidate pattern. As illustrated in C of FIG. 3, the specifying unit 24 specifies a pattern candidate of which a frequency score is equal to or more than the threshold TH2, as the high frequency pattern. In C of FIG. 3, a field of "high frequency pattern" of the candidate pattern specified as the high frequency pattern is represented as "1", and a field of "high frequency pattern" of the candidate pattern that is not specified as the high frequency pattern is represented as "0".

Furthermore, in a case of being instructed to specify the high frequency pattern based on a new overall model from the determination unit 28 to be described later, the specifying unit 24 specifies the high frequency pattern similar to the above, using each piece of the data 92 of a part or all of the new training sample 90.

The second training unit 26 trains a machine learning model for each high frequency pattern, using a partial training sample obtained by extracting a feature amount corresponding to each high frequency pattern specified by the specifying unit 24, from each of the plurality of training samples 90.

Specifically, the second training unit 26 extracts a path traced from the node of the feature amount of the item to the root node, for each item included in each high frequency pattern, from the data 92 of each training sample 90. The second training unit 26 creates the partial training sample by giving a label 94 of an original training sample 90, to a partial graph obtained by aggregating the paths extracted for the respective items included in the high frequency pattern. Hereinafter, a partial training sample for a j-th high frequency pattern created in the i-th processing in the repetition is referred to as a "partial training sample_i-j".

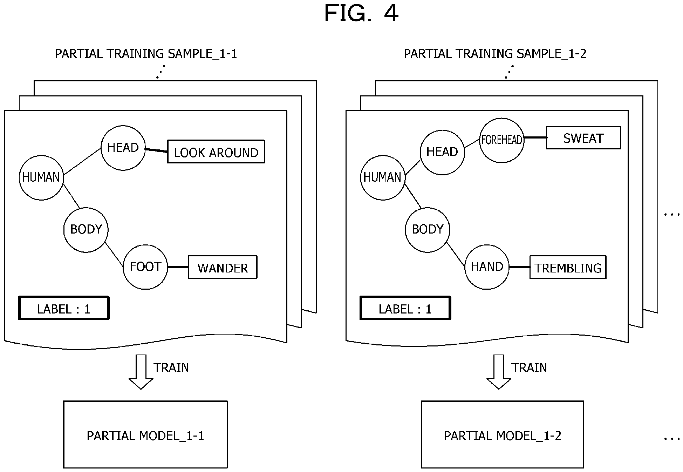

As illustrated in FIG. 4, the second training unit 26 trains the machine learning model, similarly to the training of the overall model by the first training unit 22, using each partial training sample_i-j. Hereinafter, the machine learning model trained using the partial training sample_i-j is referred to as a "partial model_i-j". The second training unit 26 adds the trained partial model to the partial model set 30.

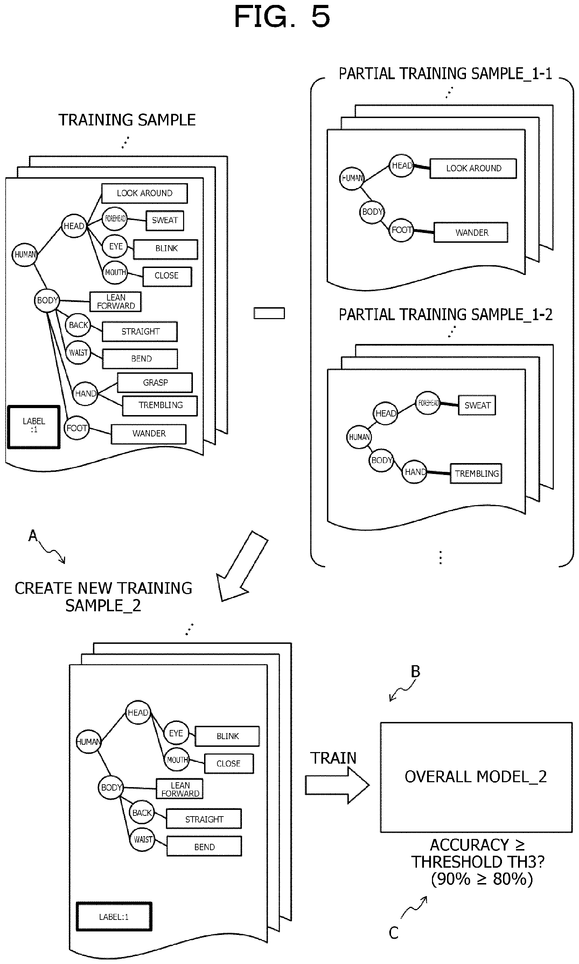

As illustrated in A of FIG. 5, the determination unit 28 creates a plurality of new training samples obtained by removing a part of the partial training sample_i-j, from each of the plurality of training samples 90. Hereinafter, the training sample used for the i-th processing in the repetition is referred to as a "training sample_i", and the new training sample obtained by removing the part of the partial training sample_i-j, from the training sample_i is referred to as a "training sample_i+1". The determination unit 28 transfers the created training sample_i+1 to the first training unit 22 and instructs to train a new overall model_i+1. As a result, as illustrated in B of FIG. 5, the new overall model_i+1 is trained by the first training unit 22.

When the new overall model is trained by the first training unit 22, the determination unit 28 calculates accuracy of the new trained overall model and determines whether or not the accuracy is equal to or more than a threshold TH3. The threshold TH3 is an example of a "third threshold" of the disclosed technology. The accuracy may be, for example, a correct answer rate of the estimation result by the overall model, or the like. In a case where the accuracy is equal to or more than the threshold TH3, the determination unit 28 instructs the specifying unit 24 to specify a high frequency pattern based on the new overall model. Until the accuracy falls below the threshold TH3, the determination unit 28 repeats the creation of the new training sample, the instruction to the first training unit 22 to train the overall model, and the instruction to the specifying unit 24 to specify the high frequency pattern based on the new overall model. The partial model set 30 at a stage when the accuracy falls below the threshold TH3 is a final partial model set 30.

Next, the estimation explanation unit 40 will be described. The estimation explanation unit 40 is a functional unit that functions at the time of estimation processing. Estimation target data is input to the information processing device 10 at the time of estimation processing. The estimation target data is similar to the training sample 90, except that the label 94 is not given.

As illustrated in FIG. 1, the estimation explanation unit 40 includes an extraction unit 42, an estimation unit 44, and an explanation unit 46.

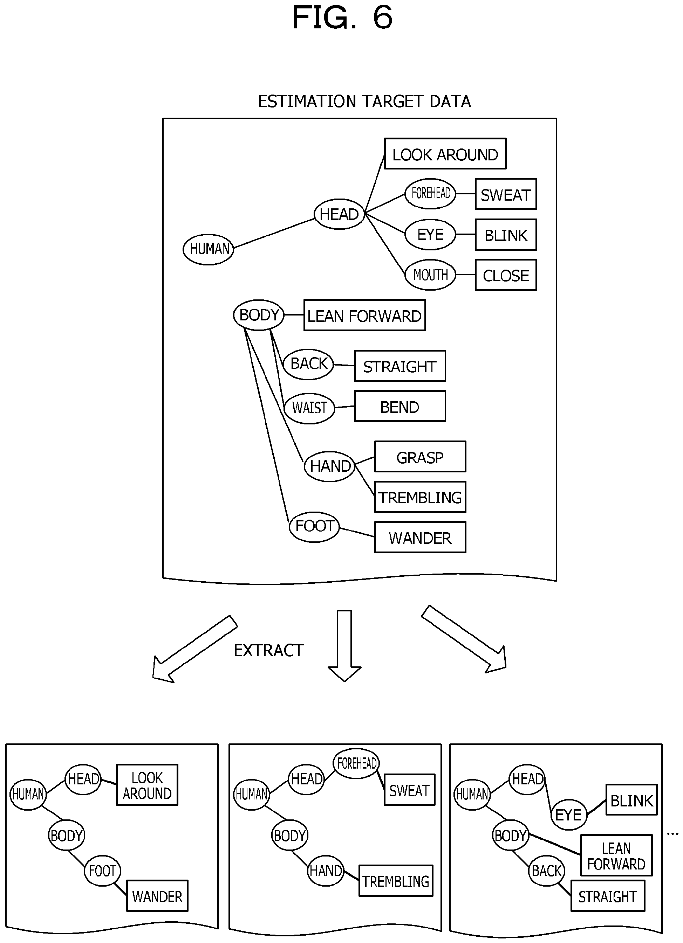

As illustrated in FIG. 6, the extraction unit 42 extracts a combination of one or more feature amounts indicating each high frequency pattern corresponding to each partial model included in the partial model set 30, from the estimation target data. Specifically, the extraction unit 42 extracts a path traced from the node of the feature amount of the item to the root node, for each item included in each high frequency pattern specified by the specifying unit 24, from the estimation target data. The extraction unit 42 aggregates the path extracted for each item included in the high frequency pattern and creates a partial graph for each high frequency pattern. The partial graph is an example of "partial data" of the disclosed technology.

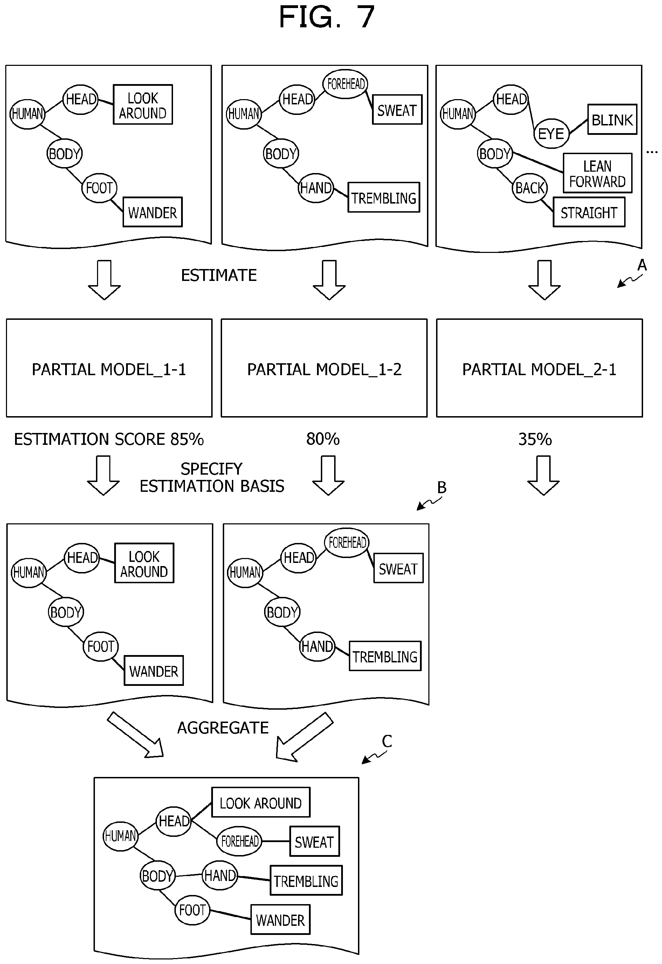

As illustrated in A of FIG. 7, the estimation unit 44 inputs each partial graph extracted by the extraction unit 42 into the partial model of the corresponding high frequency pattern included in the partial model set 30, and acquires the estimation score. The estimation unit 44 calculates an average of the estimation scores of the respective partial models, as an estimation result. Furthermore, in a case where the average of the estimation scores of the respective partial models is equal to or more than a predetermined value, the estimation unit 44 may acquire an estimation result that is TRUE, and in a case where the average is less than the predetermined value, the estimation unit 44 may acquire an estimation result that is FALSE. Furthermore, the embodiment is not limited to a case where the average of the estimation scores of the respective partial models is used, and a median or the like may be used.

As illustrated in B of FIG. 7, the explanation unit 46 specifies a partial graph selected based on the estimation score calculated by the estimation unit 44 as an estimation basis for the estimation result by the partial model set 30 regarding the estimation target data. Specifically, the explanation unit 46 selects the partial graph input to a partial model of which an estimation score is equal to or more than a threshold TH4. The threshold TH4 is an example of a "fourth threshold" of the disclosed technology. Furthermore, as illustrated in C of FIG. 7, in a case where there is the plurality of selected partial graphs, the explanation unit 46 aggregates the plurality of partial graphs as a final estimation basis and outputs the partial graphs together with the estimation result estimated by the estimation unit 44. Note that the explanation unit 46 may output the plurality of selected partial graphs as the estimation result without aggregating the plurality of selected partial graphs.

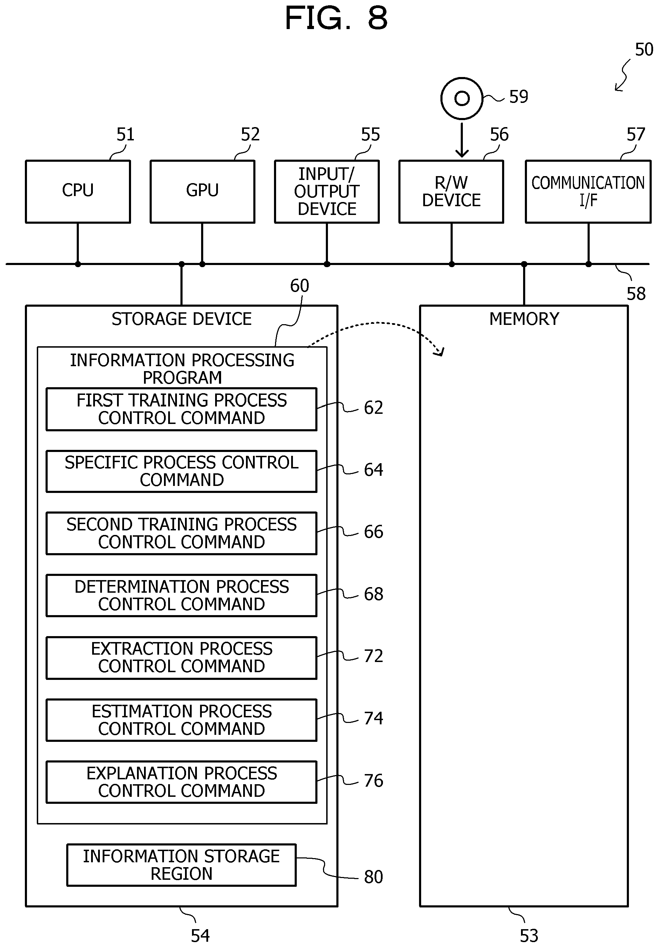

The information processing device 10 may be implemented, for example, by a computer 50 illustrated in FIG. 8. The computer 50 includes a central processing unit (CPU) 51, a graphics processing unit (GPU) 52, a memory 53 as a temporary storage region, and a nonvolatile storage device 54. Furthermore, the computer 50 includes an input/output device 55 such as an input device or a display device, and a read/write (R/W) device 56 that controls reading and writing of data from/to a storage medium 59. Furthermore, the computer 50 includes a communication interface (I/F) 57 coupled to a network such as the Internet. The CPU 51, the GPU 52, the memory 53, the storage device 54, the input/output device 55, the R/W device 56, and the communication I/F 57 are coupled to each other via a bus 58.

The storage device 54 is, for example, a hard disk drive (HDD), a solid state drive (SSD), a flash memory, or the like. The storage device 54 as a storage medium stores an information processing program 60 for causing the computer 50 to function as the information processing device 10. The information processing program 60 includes a first training process control command 62, a specific process control command 64, a second training process control command 66, a determination process control command 68, an extraction process control command 72, an estimation process control command 74, an explanation process control command 76. Furthermore, the storage device 54 includes an information storage region 80 where the information configuring the partial model set 30 is stored.

The CPU 51 reads the information processing program 60 from the storage device 54 and develops the information processing program 60 into the memory 53, and sequentially executes the control commands included in the information processing program 60. The CPU 51 operates as the first training unit 22 illustrated in FIG. 1, by executing the first training process control command 62. Furthermore, the CPU 51 operates as the specifying unit 24 illustrated in FIG. 1, by executing the specific process control command 64. Furthermore, the CPU 51 operates as the second training unit 26 illustrated in FIG. 1, by executing the second training process control command 66. Furthermore, the CPU 51 operates as the determination unit 28 illustrated in FIG. 1, by executing the determination process control command 68. Furthermore, the CPU 51 operates as the extraction unit 42 illustrated in FIG. 1, by executing the extraction process control command 72. Furthermore, the CPU 51 operates as the estimation unit 44 illustrated in FIG. 1, by executing the estimation process control command 74. Furthermore, the CPU 51 operates as the explanation unit 46 illustrated in FIG. 1, by executing the explanation process control command 76. Furthermore, the CPU 51 reads information from the information storage region 80 and develops each partial model included in the partial model set 30 into the memory 53. This enables the computer 50 that has executed the information processing program 60 to function as the information processing device 10. Note that the CPU 51 that executes the program is hardware. Furthermore, a part of the program may be executed by the GPU 52.

Note that the functions implemented by the information processing program 60 may be implemented by, for example, a semiconductor integrated circuit, more specifically, an application specific integrated circuit (ASIC), a field-programmable gate array (FPGA), or the like.

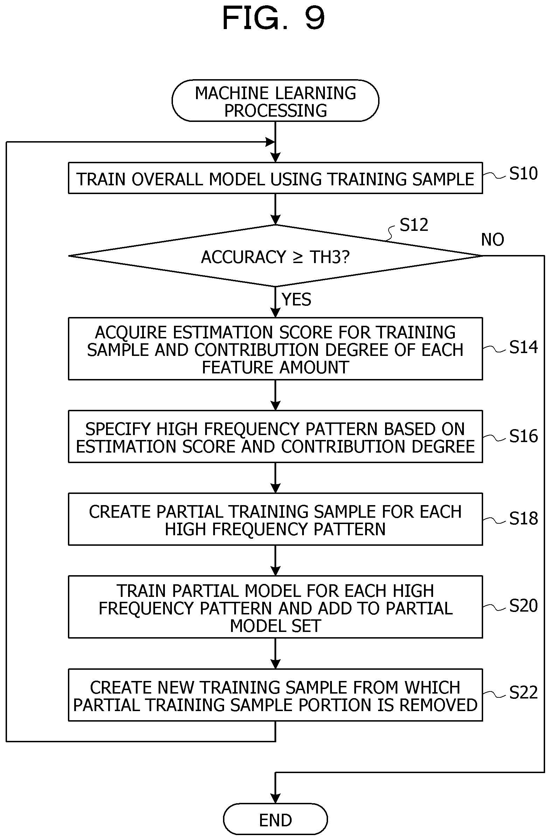

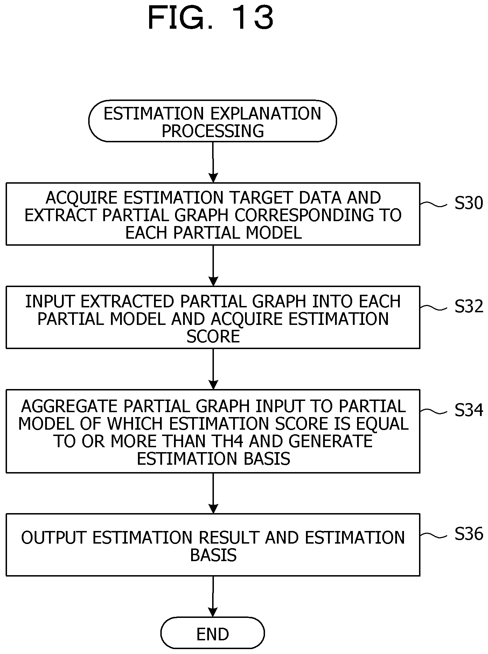

Next, an operation of the information processing device 10 according to the present embodiment will be described. At the time of machine learning, the information processing device 10 executes machine learning processing illustrated in FIG. 9, and at the time of estimation processing, the information processing device 10 executes estimation explanation processing illustrated in FIG. 13. Note that the machine learning processing and the estimation explanation processing are examples of an information processing method according to the disclosed technology.

First, the machine learning processing illustrated in FIG. 9 will be described. Here, specific examples illustrated in FIGs. 3 to 5 and 10 to 12 will be described.

In step S10, the first training unit 22 acquires a plurality of training samples 90 (training sample_1) input to the information processing device 10 and trains an overall model_1 using the plurality of training samples_1. Next, in step S12, the determination unit 28 calculates accuracy to the trained overall model_1, trained in above step S10 and determines whether or not the accuracy is equal to or more than the threshold TH3. In a case where the accuracy ≥ TH3, the procedure proceeds to step S14.

In step S14, as illustrated in A of FIG. 3, the specifying unit 24 inputs each data 92 of some or all of the plurality of training samples_1 into the overall model_1 and acquires an estimation result, an estimation score thereof, and a contribution degree of each feature amount to the estimation result.

Next, in step S16, as indicated by a broken line portion in B of FIG. 3, the specifying unit 24 specifies a feature amount of which the contribution degree is equal to or more than the threshold TH1 from the data 92 of each training sample_1 and specifies a combination of items corresponding to the specified feature amount as a pattern candidate. Then, the specifying unit 24 calculates a frequency score for each pattern candidate, based on the estimation score and the contribution degree and specifies a pattern candidate of which the frequency score is equal to or more than the threshold TH2, as a high frequency pattern, as illustrated in C of FIG. 3.

Next, in step S18, the second training unit 26 extracts a path traced from the node of the feature amount of the item to the root node, for each item included in each high frequency pattern, from the data 92 of each training sample_1. Then, the second training unit 26 gives the label 94 of the original training sample 90 to a partial graph obtained by aggregating the paths extracted for the respective items included in the high frequency pattern and creates a partial training sample_1-j.

Next, in step S20, as illustrated in FIG. 4, the second training unit 26 trains each of a partial model_1-1, a partial model_1-2,..., using each of a partial training sample_1-1, a partial training sample_1-2,... for each high frequency pattern. Then, the second training unit 26 adds the trained partial model_1-1, partial model_1-2,... to the partial model set 30.

Next, in step S22, as illustrated in A of FIG. 5, the determination unit 28 creates a plurality of new training samples_2 obtained by removing a part of each of the partial training sample_1-1, the partial training sample_1-2,... from each of the plurality of training samples_1. Then, the determination unit 28 transfers the created training sample_2 to the first training unit 22, instructs to train an overall model_2, and returns to step S10. As a result, in step S10, as illustrated in B of FIG. 5, the first training unit 22 trains the new overall model_2.

Next, in step S12, the determination unit 28 calculates accuracy of the new trained overall model_2 and determines whether or not the accuracy is equal to or more than the threshold TH3. For example, when it is assumed that the calculated accuracy be 90% and the threshold TH3 be 80%, as illustrated in C of FIG. 5, the procedure proceeds to step S14 again.

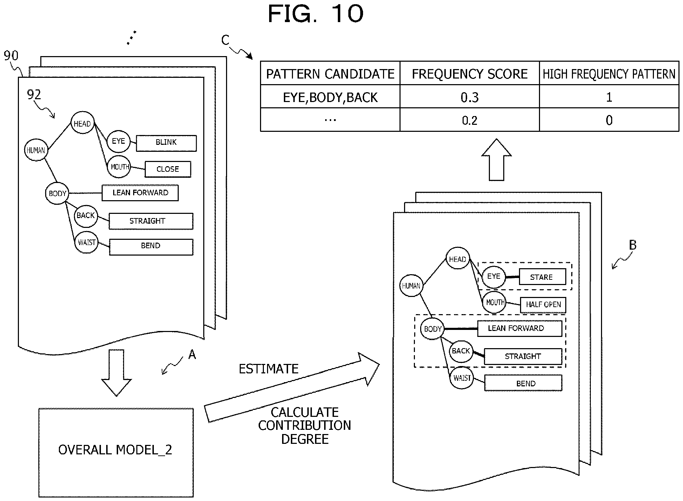

In step S14, as illustrated in A of FIG. 10, the specifying unit 24 inputs the data 92 of each of some or all of the plurality of new training samples_2 into the overall model_2 and acquires an estimation result, an estimation score thereof, and a contribution degree of each feature amount to the estimation result.

Next, in step S16, as indicated by a broken line portion in B of FIG. 10, the specifying unit 24 specifies a feature amount of which a contribution degree is equal to or more than the threshold TH1, from the data 92 of the new training sample_2, specifies the pattern candidate as in the above, and calculates the frequency score for each pattern candidate. Then, as illustrated in C of FIG. 10, the specifying unit 24 specifies a pattern candidate of which a frequency score is equal to or more than the threshold TH2, as the high frequency pattern.

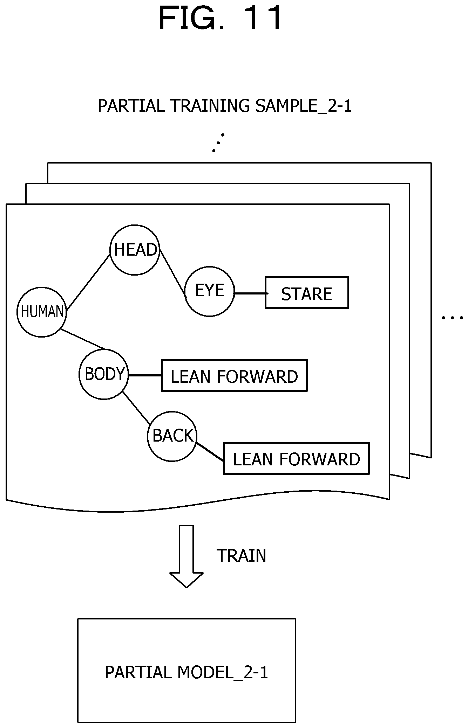

Next, in step S18, the second training unit 26 creates a partial training sample_2-1 corresponding to the high frequency pattern, from the data 92 of the new training sample_2, as in the above. Next, in step S20, as illustrated in FIG. 11, the second training unit 26 trains a partial model_2-1 using the partial training sample_2-1 and adds the trained partial model_2-1 to the partial model set 30.

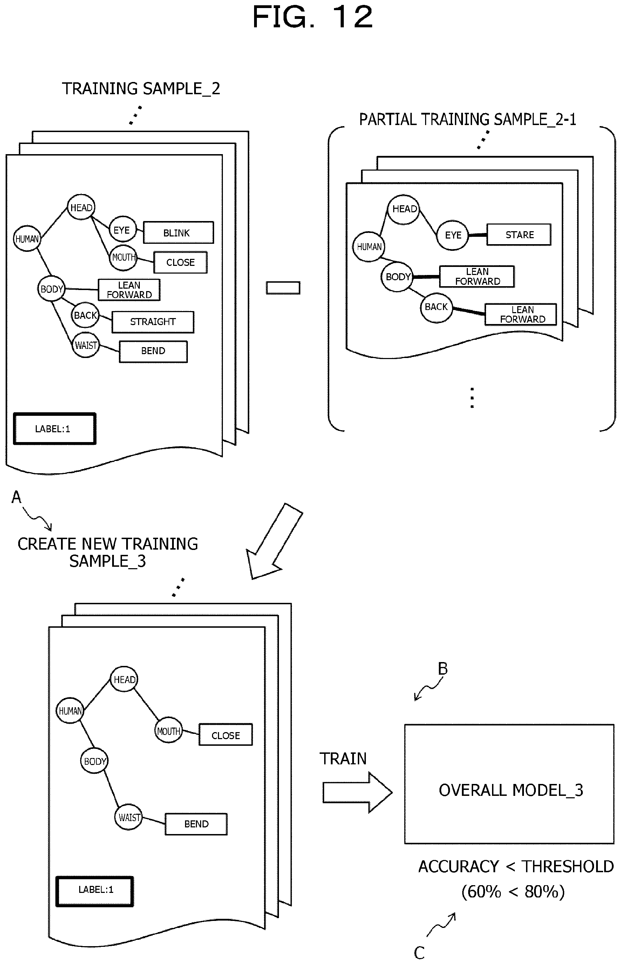

Next, in step S22, as illustrated in A of FIG. 12, the determination unit 28 creates a plurality of new training samples_3 obtained by removing a part of the partial training sample_2-1 from each training sample_2, transfers the plurality of new training samples_3 to the first training unit 22, and instructs to train an overall model_3. Then, returning to step S10, as illustrated in B of FIG. 12, the first training unit 22 trains the new overall model_3, using the training sample_3.

Next, in step S12, the determination unit 28 calculates accuracy of the overall model_3 and determines whether or not the accuracy is equal to or more than the threshold TH3. For example, as illustrated in C of FIG. 12, when it is assumed that the calculated accuracy be 60% and the threshold TH3 be 80%, the determination in this step is negative, and the machine learning processing ends.

Next, the estimation explanation processing illustrated in FIG. 13 will be described. Here, specific examples illustrated in FIGs. 6 and 7 will be described.

In step S30, the extraction unit 42 acquires the estimation target data input to the information processing device 10. Then, as illustrated in FIG. 6, the extraction unit 42 extracts a partial graph indicating each high frequency pattern corresponding to each partial model included in the partial model set 30, from the estimation target data.

Next, in step S32, as illustrated in A of FIG. 7, the estimation unit 44 inputs each partial graph extracted by the extraction unit 42 into the partial model of the corresponding high frequency pattern and acquires the estimation score. Then, the estimation unit 44 calculates an average of the estimation scores of the respective partial models or the like as an estimation result.

Next, in step S34, as illustrated in B of FIG. 7, the explanation unit 46 selects the partial graphs input into the partial model of which the estimation score is equal to or more than the threshold TH4, and as illustrated in C of FIG. 7, the explanation unit 46 aggregates the selected partial graphs and generates the partial graph as a final estimation basis. Next, in step S36, the explanation unit 46 outputs the estimation result estimated by the estimation unit 44 and the generated estimation basis and ends the estimation explanation processing.

As described above, the information processing device according to the present embodiment specifies the pattern candidate that is the combination of the one or more feature amounts, of which the contribution degree to the estimation of the overall model is equal to or more than the threshold TH1, from among the plurality of training samples including the plurality of feature amounts. Then, the information processing device specifies the high frequency pattern from the pattern candidate, based on the appearance frequency in the plurality of training samples. Furthermore, the information processing device extracts the partial graph corresponding to each high frequency pattern, from the estimation target data. Furthermore, the information processing device calculates the estimation score of the partial model for each high frequency pattern, in a case where the partial graph extracted from the estimation target data is input to the partial model trained for each high frequency pattern that is the partial model corresponding to the partial graph extracted from the estimation target data. Then, the information processing device presents the partial graph selected based on the estimation score calculated for each partial model for each high frequency pattern as the estimation basis of the machine learning model for the estimation target data. As a result, it is possible to explain a highly persuasive and reliable estimation basis from multiple viewpoints.

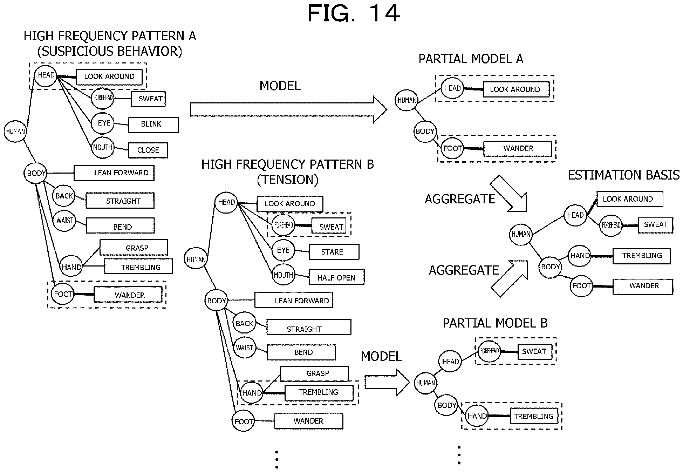

Specifically, for example, only by simply using the feature amount of which the contribution degree is high as the estimation basis, only the left partial graph in the low portion in FIG. 6 is output, and an estimation basis from only one viewpoint is output. On the other hand, as illustrated in FIG. 14, the information processing device according to the present embodiment specifies the high frequency pattern with a high appearance frequency in the plurality of training samples, having a combination of feature amounts of which the contribution degree is high, from the training sample. Then, the information processing device according to the present embodiment describes the estimation basis with the partial model modeled for each high frequency pattern. Therefore, in a case where there is the plurality of high frequency patterns, the plurality of partial models is generated, and it is possible to explain the estimation basis from various viewpoints.

For example, as the behavior estimation of the person, in the example in FIG. 14 indicating a task for estimating a shoplifting behavior, it is assumed that a high frequency pattern A be a pattern representing a feature of a suspicious behavior and a high frequency pattern B be a pattern representing a feature of tension. In this case, explanation from multiple viewpoints such as a suspicious behavior or tension can be made, as the estimation basis estimating that the behavior of the person is the shoplifting behavior.

Note that, while the information processing program is stored (installed) beforehand in the storage device in the embodiment described above, the embodiment is not limited to this. The programs according to the disclosed technology may be provided in a form stored in a storage medium such as a compact disc read only memory (CD-ROM), a digital versatile disc read only memory (DVD-ROM), or a universal serial bus (USB) memory.

## Claims

1. An information processing program for causing a computer to execute processing comprising:
extracting partial data that corresponds to each of a plurality of patterns of which an index according to an appearance frequency in a plurality of training samples is equal to or more than a second threshold, that is a pattern of a combination of one or more feature amounts of which a contribution degree to estimation of a machine learning model is equal to or more than a first threshold, from among the plurality of training samples that includes the plurality of feature amounts, from estimation target data that includes a plurality of feature amounts, to be a target of estimation processing by using the machine learning model;
calculating a likelihood of an estimation result of a partial model for each pattern, in a case where the partial data extracted from the estimation target data is input to a corresponding partial model among the partial models trained for the respective patterns; and
outputting the partial data selected based on the likelihood calculated for each partial model for each pattern, as an estimation basis of the machine learning model for the estimation target data.

2. The information processing program according to claim 1, for causing the computer to execute processing further comprising: specifying the plurality of patterns from each of the plurality of training samples and training a partial model for each pattern, by using a partial training sample obtained by extracting partial data that corresponds to each of the plurality of specified patterns.

3. The information processing program according to claim 2, wherein the training the partial model includes extracting partial data that corresponds to a new pattern from a plurality of new training samples and training a partial model that corresponds to the new pattern, until accuracy of an estimation result of a new machine learning model trained by using the plurality of new training samples obtained by removing the partial data used to train the partial model from each of the plurality of training samples falls below a third threshold.

4. The information processing program according to any one of claims 1 to 3, wherein the selecting the partial data based on the likelihood includes selecting the partial data input to the partial model of which the likelihood is equal to or more than a fourth threshold.

5. The information processing program according to any one of claims 1 to 4, wherein the outputting the estimation basis includes aggregating and outputting a plurality of pieces of the partial data selected based on the likelihood.

6. The information processing program according to any one of claims 1 to 5, wherein the training sample and the estimation target data are graph data that represents the plurality of feature amounts with a plurality of nodes and an edge that couples between the nodes, the partial data is a partial graph of the graph data that indicates the training sample or the estimation target data, and the machine learning model and the partial model are machine learning models capable of handling the graph data.

7. An information processing method, in which a computer executes processing comprising:
extracting partial data that corresponds to each of a plurality of patterns of which an index according to an appearance frequency in a plurality of training samples is equal to or more than a second threshold, that is a pattern of a combination of one or more feature amounts of which a contribution degree to estimation of a machine learning model is equal to or more than a first threshold, from among the plurality of training samples that includes the plurality of feature amounts, from estimation target data that includes a plurality of feature amounts, to be a target of estimation processing by using the machine learning model;
calculating a likelihood of an estimation result of a partial model for each pattern, in a case where the partial data extracted from the estimation target data is input to a corresponding partial model among the partial models trained for the respective patterns; and
outputting the partial data selected based on the likelihood calculated for each partial model for each pattern, as an estimation basis of the machine learning model for the estimation target data.

8. An information processing device comprising:
an extraction unit configured to extract partial data that corresponds to each of a plurality of patterns of which an index according to an appearance frequency in a plurality of training samples is equal to or more than a second threshold, that is a pattern of a combination of one or more feature amounts of which a contribution degree to estimation of a machine learning model is equal to or more than a first threshold, from among the plurality of training samples that includes the plurality of feature amounts, from estimation target data that includes a plurality of feature amounts, to be a target of estimation processing by using the machine learning model;
an estimation unit configured to calculate a likelihood of an estimation result of a partial model for each pattern, in a case where the partial data extracted from the estimation target data is input to a corresponding partial model among the partial models trained for the respective patterns; and
an explanation unit configured to output the partial data selected based on the likelihood calculated for each partial model for each pattern, as an estimation basis of the machine learning model for the estimation target data.
